# EUROPEAN PATENT APPLICATION

(11) **EP 4 663 326 A1**
(43) Date of publication of application: **17.12.2025**
(21) Application number: 25181770.6
(22) Date of filing: 10.06.2025
(51) Int. Cl.: B23B 27/00, B23B 27/16, B23B 51/00

(54) **BODY AND CUTTING TOOL**

(30) Priority: 11.06.2024 JP 2024094288
(71) Applicant: Tungaloy Corporation, Iwaki-shi, Fukushima 970-1144 (JP)
(72) Inventor: SHIKAMA, Hiroya, Iwaki-shi, Fukushima 970-1144 (JP); SAJI, Ryuichi, Iwaki-shi, Fukushima 970-1144 (JP)
(74) Representative: Vossius & Partner Patentanwälte Rechtsanwälte mbB

(57) **Abstract**

The present disclosure provides a body (10) comprising an insert pocket (11) into which a cutting insert (50) is mounted, the insert pocket including: a lower jaw part (13) having a screw hole (18); an upper jaw part (15) that is arranged apart from the lower jaw part; and a housing groove part into which the cutting insert (50) is inserted, the housing groove part being formed between the lower jaw part and the upper jaw part, wherein the housing groove part is formed such that a groove width on a leading end side is narrower than a groove width on a rear end side.

## Description

### Background

### Field

The present invention relates to a body and a cutting tool.

### Description of Related Art

Japanese laid-open patent publication Nos. JP2023-165067 A and JP2006-192553 A each disclose a cutting tool for drilling purposes, in which a cutting insert is mounted on an insert mounting seat of a body. In addition, Japanese laid-open patent publication No. 2004-268154 A discloses a cutting tool comprising a cutting insert that has a guide part which is in sliding contact with an inner peripheral surface of a cut hole.

In the cutting tools disclosed in JP2023-165067 A, JP2006-192553 A and JP2004-268154 A, when a cutting insert is mounted onto a body, the cutting insert arranged on the insert mounting seat of the body is held with one hand, while the cutting insert is screwed with the other hand by using a screw onto the body. When the cutting insert is removed, the screw is loosened while the cutting insert is grasped, in order to prevent the cutting insert from dropping. However, if the tool diameter of such cutting tool is reduced in order to perform hole machining for small-diameter holes, the above-described mounting and removal operations will become difficult.

### Summary

The present invention has been made under such circumstances, and an object of the present invention is to provide a body and a cutting tool that are capable of allowing a cutting insert to be easily mounted thereon or removed therefrom.

A body according to one aspect of the present invention is a body comprising an insert pocket into which a cutting insert is mounted, the insert pocket including: a lower jaw part having a screw hole; an upper jaw part that is arranged apart from the lower jaw part; and a housing groove part into which the cutting insert is inserted, the housing groove part being formed between the lower jaw part and the upper jaw part, wherein the housing groove part is formed such that a groove width on a leading end side is narrower than a groove width on a rear end side.

In the body having the above-described structure, the cutting insert can be resiliently sandwiched and held by the lower jaw part and the upper jaw part that constitute the housing groove part of the insert pocket. Such configuration eliminates the need to grasp the cutting insert with a hand during the mounting or removal operation of the cutting insert with respect to the insert pocket, which makes it possible to improve the workability of the mounting and removal operations of the cutting insert. In particular, even if the diameter of the body is reduced in order to perform hole machining for small-diameter holes, the cutting insert can still be smoothly mounted into or removed from the insert pocket, without dropping the cutting insert.

The screw hole may be arranged at a position that does not overlap with the upper jaw part in a plan view which is viewed from a side of the upper jaw part.

The screw hole may have a central axis that is tilted with respect to a perpendicular line of a seat surface of the lower jaw part on which the cutting insert abuts.

The central axis of the screw hole may be tilted from one side toward the other side of the body, with respect to the perpendicular line of the seat surface, in a front view.

The central axis of the screw hole may be tilted, with respect to the perpendicular line of the seat surface, toward a rear end as it extends away from an abutment surface of the upper jaw part on which the cutting insert abuts, in a side view.

A cutting tool according to another aspect of the present invention comprises: the above-described body; and a cutting insert that is mounted into the insert pocket of the body.

The cutting insert may be mounted into the insert pocket of the body, in a state in which a center of a circumcircle is aligned with a rotational axis of the body in a front view.

### Brief Description of Drawings

Fig. 1 is a perspective view of a cutting tool according to an embodiment.
Fig. 2 is an exploded perspective view of the cutting tool according to the present embodiment.
Fig. 3 is a plan view of the cutting tool.
Fig. 4 is a right-side view of the cutting tool.
Fig. 5 is a bottom view of the cutting tool.
Fig. 6 is a front view of the cutting tool.
Fig. 7 is a perspective view of a body.
Fig. 8 is a perspective view as viewed from the side of a bottom surface of the body.
Fig. 9 is a plan view of the body.
Fig. 10 is a cross-sectional view taken along line X-X in Fig. 9.
Fig. 11 is a cross-sectional view taken along line XI-XI in Fig. 9.
Fig. 12 is a perspective view of a cutting insert.
Fig. 13 is a plan view of the cutting insert.
Fig. 14 is a right-side view of the cutting insert.
Fig. 15 is a bottom view of the cutting insert.
Fig. 16 is a front view of the cutting insert.
Fig. 17 is a cross-sectional view taken along line XVII-XVII in Fig. 3.
Fig. 18 is a cross-sectional view taken along line XVIII-XVIII in Fig. 3.

### Detailed Description

Preferred embodiments of a body and a cutting tool according to the present invention will now be described in detail below, with reference to the attached drawings.

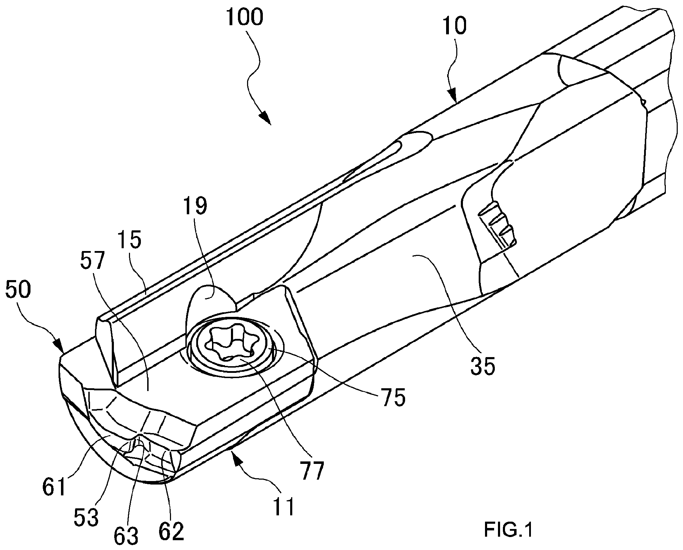

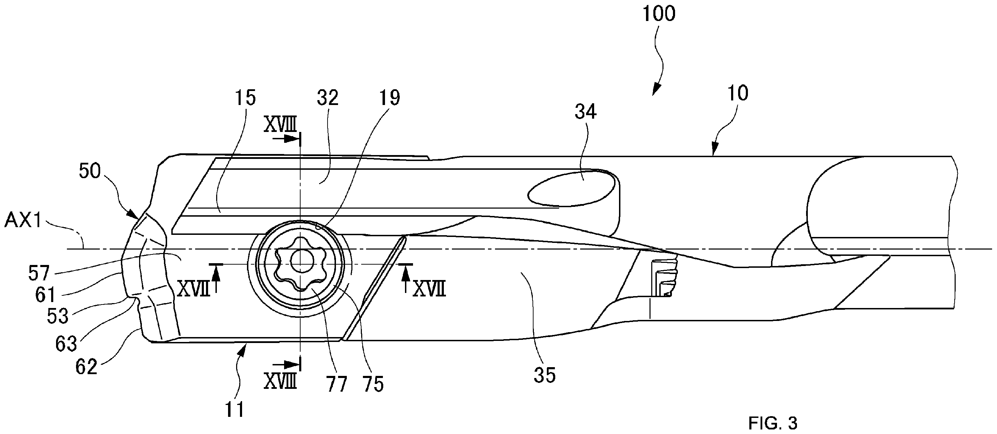

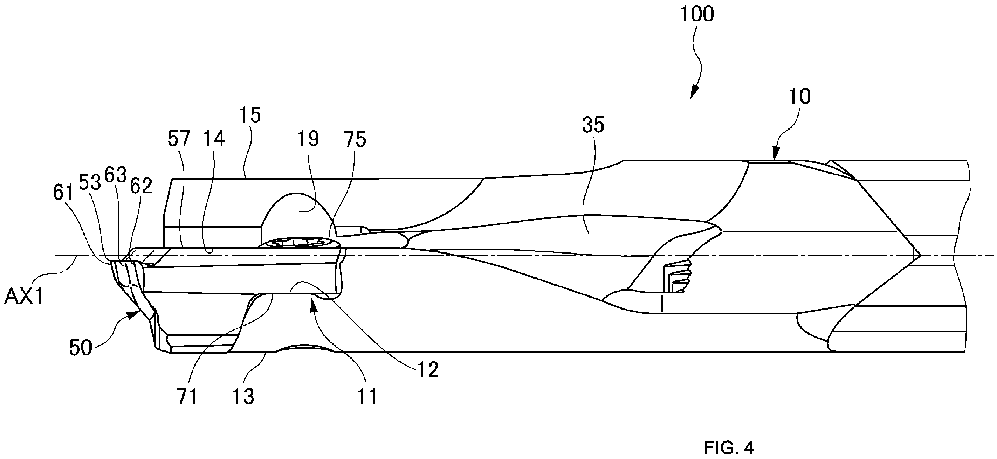

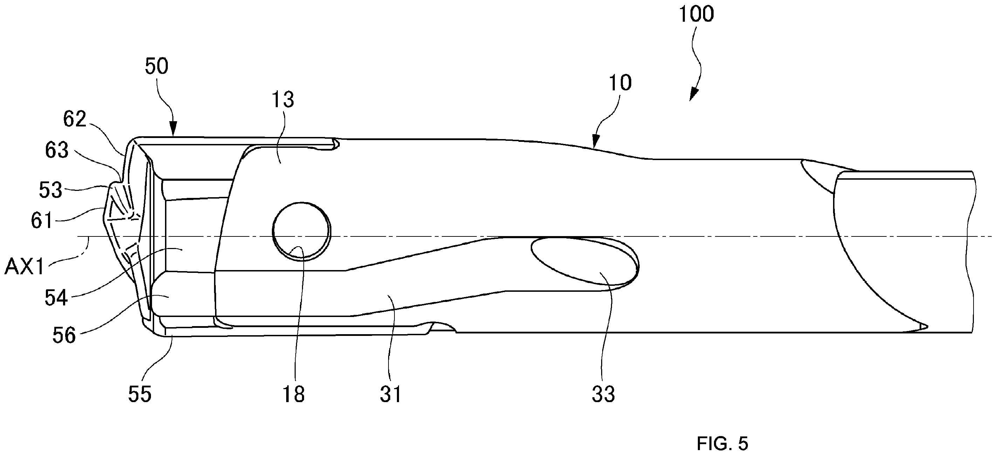

As shown in Figs. 1-6, a cutting tool 100 according to the present embodiment includes a body 10 and a cutting insert 50. In the cutting tool 100, the cutting insert 50 is mounted at a leading end of the body 10. The cutting tool 100 is rotated around a rotational axis AX1, so that the cutting insert 50 at the leading end of the body 10 performs drilling on a workpiece. Such cutting tool 100 can also be used for performing turning for cutting a rotating workpiece.

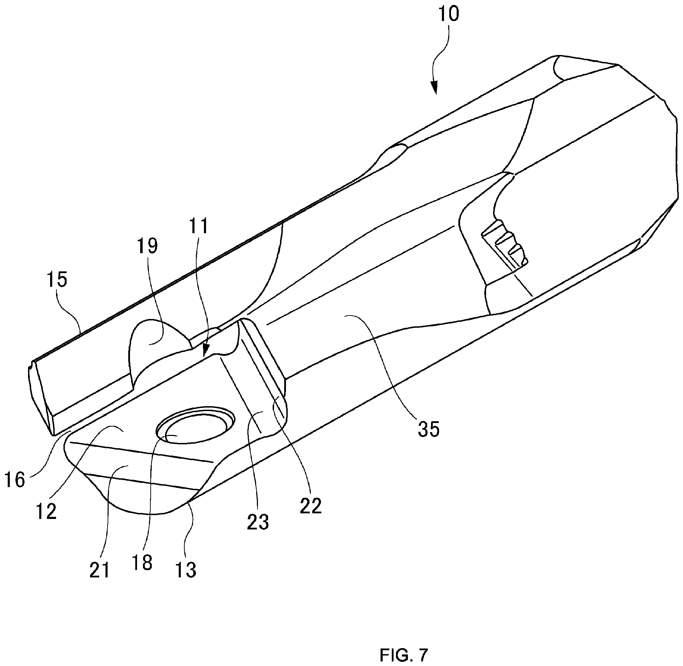

As shown in Figs. 7-11, the body 10 includes an insert pocket 11. The insert pocket 11 functions as an insert mounting seat on which the cutting insert 50 is mounted, and such insert pocket 11 is formed at the leading end of the body 10. The cutting insert 50 is mounted in the insert pocket 11.

The insert pocket 11 includes a lower jaw part 13 having a seat surface 12 and an upper jaw part 15 having an abutment surface 14. The lower jaw part 13 and the upper jaw part 15 extend toward the leading end of the body 10.

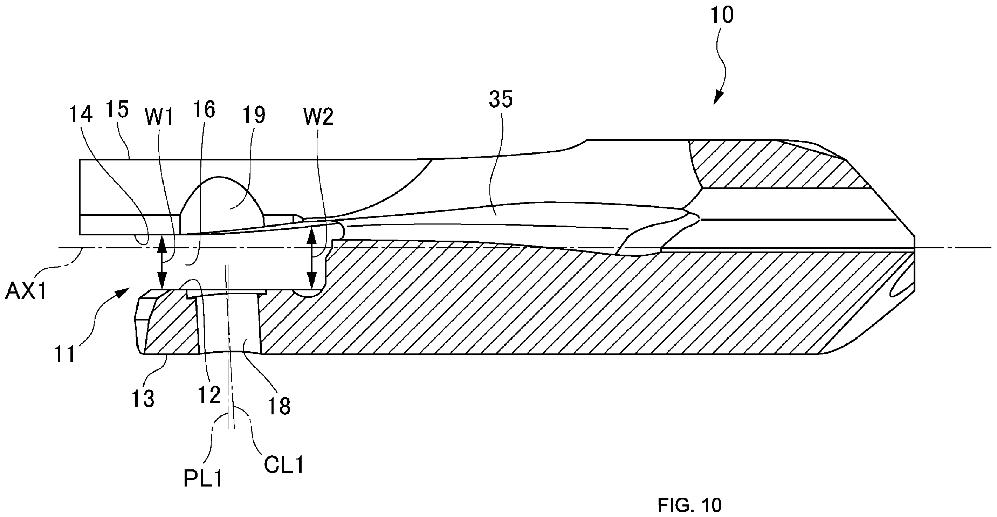

The lower jaw part 13 and the upper jaw part 15 are arranged apart from each other, and a portion between the lower jaw part 13 and the upper jaw part 15 serves as a housing groove part 16 into which the cutting insert 50 is inserted. The housing groove part 16 is formed such that a groove width W1 on the leading end side of the body 10 is narrower than a groove width W2 on a rear end side of the body 10 (see Fig. 10).

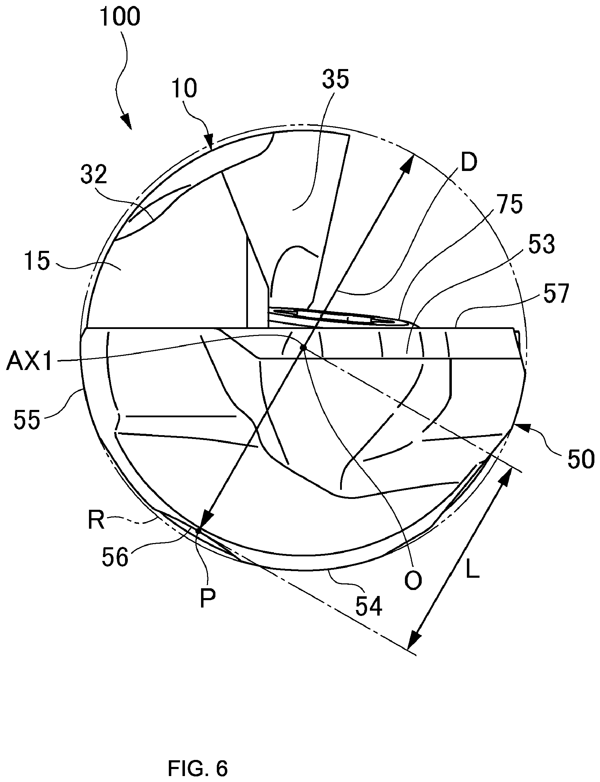

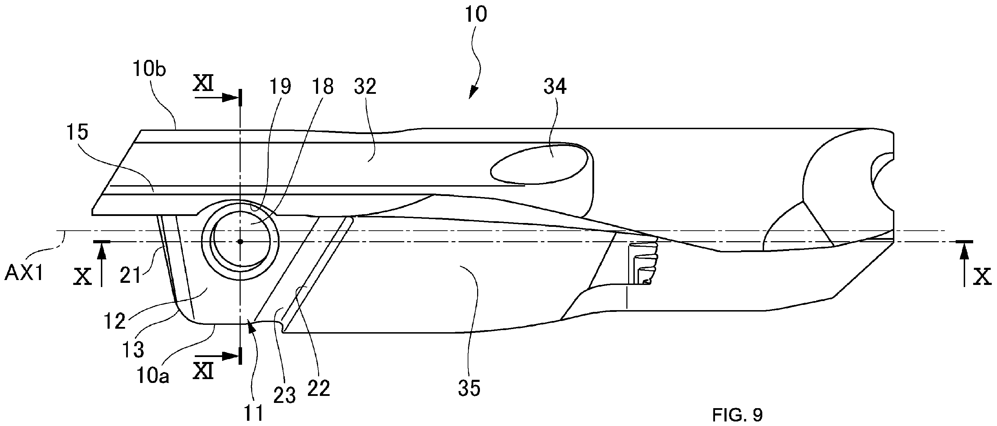

The upper jaw part 15 constituting the insert pocket 11 is formed so as to have a width that is smaller than that of the lower jaw part 13 in a plan view, and arranged at an opposed position to one side, in the width direction, of the lower jaw part 13 (see Fig. 9). It should be noted that, in the present embodiment, the plan view of the body 10 refers to a view at a right angle to (in a vertical direction with respect to) a front view thereof in which a cutting edge 53 is oriented substantially horizontally, as shown in Fig. 6, when the body 10 is viewed from the leading end side thereof with respect to the rotational axis AX1. A screw hole 18 is formed in the seat surface 12 of the lower jaw part 13, and a screw 75 serving as a fastening component for fastening the cutting insert 50 is screwed into the screw hole 18 (see Fig. 1). In the lower jaw part 13, the screw hole 18 is formed at a position that is displaced from the opposed position to the upper jaw part 15. In this way, the insert pocket 11 of the body 10 has: the seat surface 12 of the lower jaw part 13 which is provided with the screw hole 18; and the abutment surface 14 of the upper jaw part 15. The upper jaw part 15 is provided with a clearance recess 19 for avoiding interference with the screw 75 that is screwed into the screw hole 18 in the lower jaw part 13.

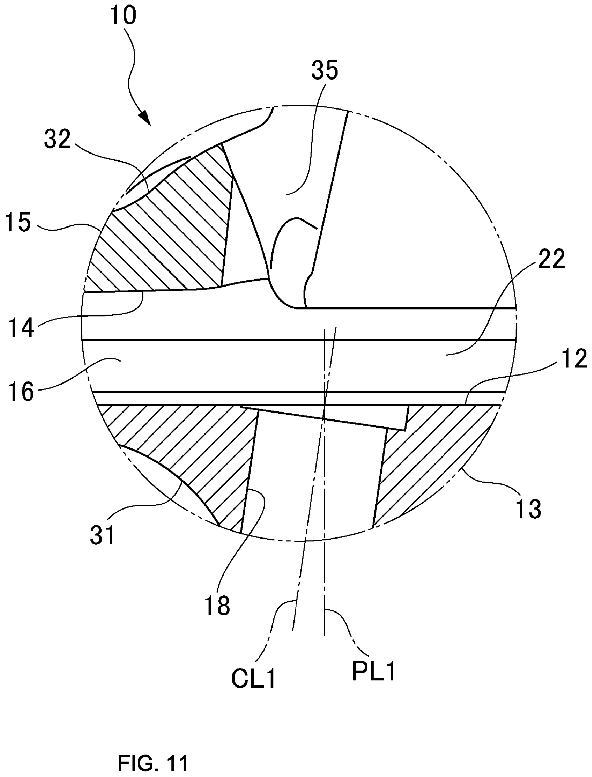

In the front view of the body 10, the screw hole 18 has a central axis CL1 that is tilted with respect to a perpendicular line PL1 of the seat surface 12 (see Fig. 11). In the side view of the body 10, the central axis CL1 of the screw hole 18 is tilted, with respect to the perpendicular line PL1 of the seat surface 12, toward the rear end as it extends away from the abutment surface 14 (see Fig. 10). By tilting the central axis CL1 of the screw hole 18 with respect to the perpendicular line PL1 of the seat surface 12 as described above, the number of threads formed in the screw hole 18 can be increased. In particular, by tilting the central axis CL1 of the screw hole from one side 10a toward the other side 10b of the body 10, with respect to the perpendicular line PL1, in the front view of the body 10, as in the present embodiment, the number of threads in the screw hole 18 can be further increased.

The body 10 has a front constraining surface 21 and a rear constraining surface 22. In the insert pocket 11, the front constraining surface 21 is provided on the leading end side of the body 10, and the rear constraining surface 22 is provided on the rear end side of the body 10. The front constraining surface 21 is formed at a front end of the lower jaw part 13 that constitutes the insert pocket 11, and the rear constraining surface 22 is formed on the deeper side in the insert pocket 11. The front constraining surface 21 and the rear constraining surface 22 are formed along the width direction of the insert pocket 11.

In the plan view of Fig. 9, the front constraining surface 21 and the rear constraining surface 22 are non-parallel to each other. More specifically, the front constraining surface 21 is tilted gradually toward the leading end as it extends from the one side 10a toward the other side 10b of the body 10, and the rear constraining surface 22 is tilted gradually toward the rear end as it extends from the one side 10a toward the other side 10b of the body 10. In this way, in the plan view of Fig. 9, the front constraining surface 21 and the rear constraining surface 22 are arranged in an inverted V-shape such that the distance therebetween increases from the one side 10a toward the other side 10b. In addition, the front constraining surface 21 is formed as a tilted surface that is tilted gradually toward the leading end of the lower jaw part 13 as it extends from the seat surface 12 of the lower jaw part 13 toward a bottom of the lower jaw part 13. A clearance groove 23 for avoiding interference with the cutting insert 50 is formed between the rear constraining surface 22 and the seat surface 12.

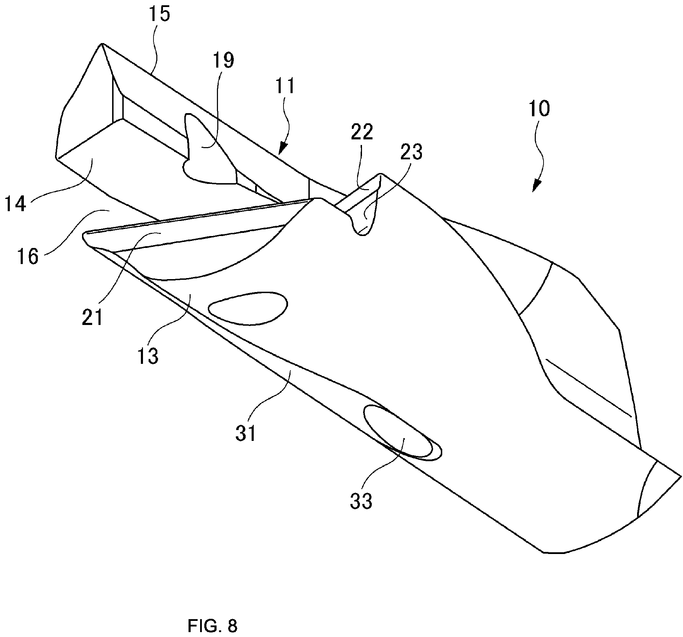

The body 10 has two groove parts 31, 32 (see Figs. 8 and 9). One groove part 31 is formed in the lower jaw part 13 so as to be located on the opposite side to the upper jaw part 15, and the other groove part 32 is formed in the upper jaw part 15 so as to be located on the opposite side to the lower jaw part 13. These groove parts 31, 32 are formed along the rotational axis AX1 of the body 10. The body 10 also has two discharge ports 33, 34. These discharge ports 33, 34 are discharge ports for coolant, and the coolant supplied through supply paths (not shown) formed inside the body 10 is discharged from the discharge ports 33, 34. A portion near a rear end of one groove part 31 is connected to the discharge port 33, and a rear end of the other groove part 32 is connected to the discharge port 34. The coolant is a fluid supplied from the machine tool side during machining, for the purpose of discharging chips, and providing cooling, lubrication and rust proofing for the tool and a workpiece.

The body 10 has a discharge groove 35 (see Fig. 7). The discharge groove 35 is a recessed groove for discharging chips generated during cutting, and such discharge groove 35 is formed so as to extend from the leading end side of the body 10 toward the rear end side of the body 10.

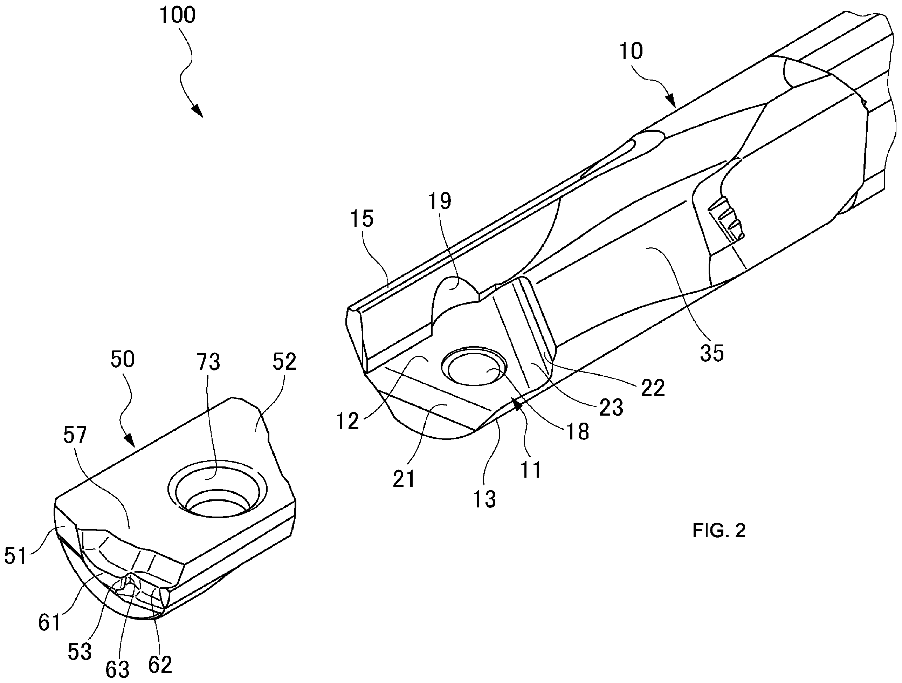

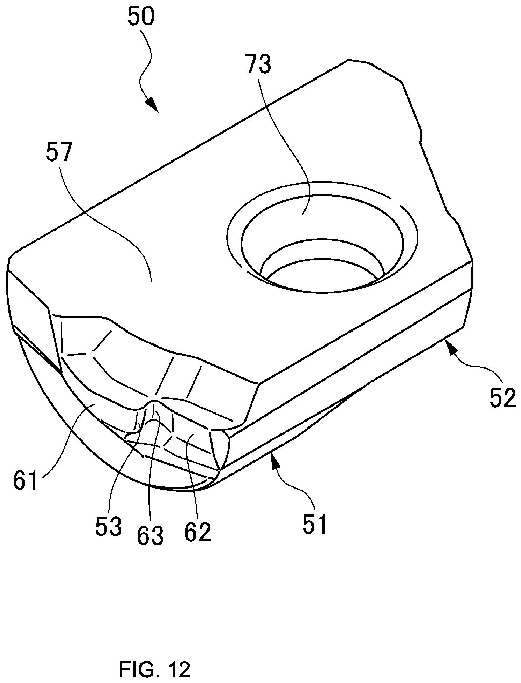

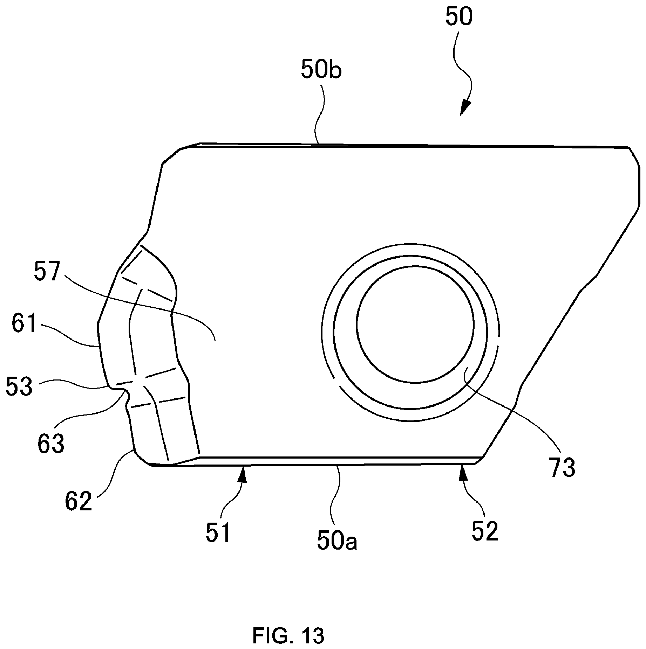

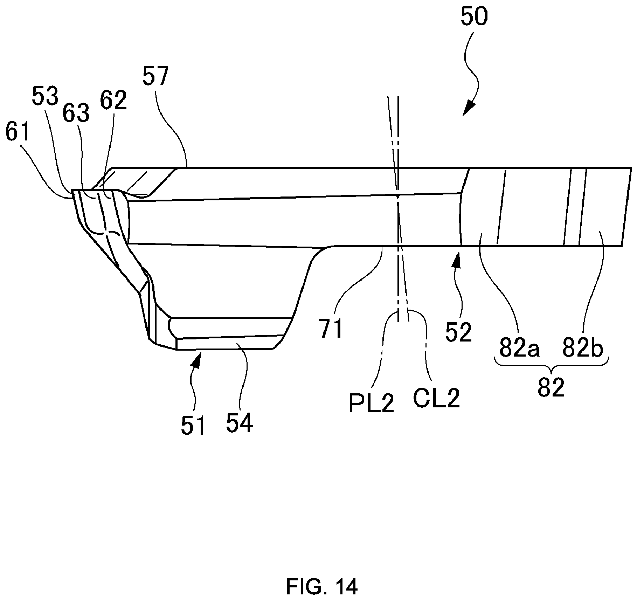

As shown in Figs. 12-16, the cutting insert 50 is fitted into, and thereby mounted in, the insert pocket 11 of the body 10, with a rear part 52 of the cutting insert 50 facing the body 10 (see Fig. 2). The cutting insert 50 may be formed of various materials such as, for example, cemented carbide, cermet, ceramics, ultrahigh-pressure sintered body, and diamond.

The cutting insert 50 has a cutting edge 53, two guide parts 54, 55, and a fluid groove 56. The cutting edge 53, the guide parts 54, 55 and the fluid groove 56 are provided in a front part 51 of the cutting insert 50. The cutting insert 50 may have a plurality of cutting edges 53. The cutting insert 50 is required to have at least two guide parts 54, 55, and may therefore have three or more guide parts.

In a state in which the cutting insert 50 is mounted on the body 10, the cutting edge 53 cuts a workpiece by means of relative rotation with respect to the workpiece. The cutting edge 53 has a central edge 61 and a peripheral edge 62. The central edge 61 primarily cuts a central part of a bottom of a machined hole, and the peripheral edge 62 primarily cuts a peripheral part of the bottom of such machined hole. The central edge 61 protrudes toward the leading end, with respect to the peripheral edge 62, and such configuration causes a step 63 to be formed between the central edge 61 and the peripheral edge 62. The provision of such step 63 allows chips to be cut in a longitudinal direction along which such chips extend, resulting in smaller chip shape in comparison with the case where no such step 63 is provided. As a result, chips that have been produced are hardly clogged in the tool during the discharge of such chips.

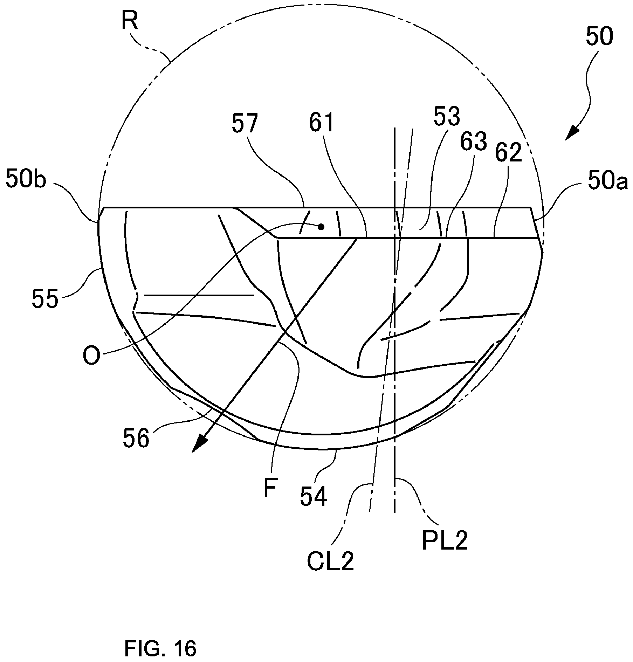

The guide parts 54, 55 guide the cutting tool 100 in sliding contact with an inner surface of a machined hole in a workpiece during cutting of the workpiece. The guide part 54 is provided on the opposite side to the upper surface 57 of the cutting insert 50, and the guide part 55 is provided substantially on the opposite side to an outer peripheral end of the cutting edge 53 (see Fig. 16). The cutting insert 50 has a substantially semi-circular shape in a front view, and the two guide parts 54, 55 are each formed in an arc-like shape in the front view (see Fig. 16). Here, during cutting of a workpiece, cutting force F is produced at the cutting edge 53 of the cutting insert 50. Assuming that the center of a circumcircle R that circumscribes the guide parts 54, 55 and the outer peripheral end of the cutting edge 53 in the front view is defined as a center O in the present example, the cutting force F is produced, for example, radially outward from a position located on the side of the center O of the circumcircle R, with respect to the center of the cutting edge 53, in the front view (see Fig. 16). In the cutting insert 50 of this example, the guide parts 54, 55 are arranged so as to sandwich the produced cutting force F. In other words, the two guide parts 54, 55 are arranged such that the cutting force F remains between these guide parts 54, 55, even if the direction of the cutting force F changes. Accordingly, even if the direction of the cutting force F changes, the two guide parts 54, 55 can still receive such cutting force F, which makes it possible to achieve more stable machining.

The fluid groove 56 is provided between the two guide parts 54, 55. The fluid groove 56 is formed at a position where such fluid groove 56 is connected to one groove part 31 of the body 10, in the state in which the cutting insert 50 is mounted on the body 10. The fluid groove 56 is recessed in an arc-like shape in the front view. A bottom of the fluid groove 56 is formed so as to be recessed inwardly with respect to the circumcircle R in the front view (see Fig. 6). The fluid groove 56 is formed such that a distance L between the center O of the circumcircle R and the closest point P to the center O of the circumcircle R is greater than a quarter (1/4) of a diameter D of the circumcircle R in the front view (see Fig. 6). The shape of the bottom of the fluid groove 56 in the front view of the body 10 may be a linear shape, without being limited to the arc-like shape. When such bottom is formed in an arc-like shape, it is possible to secure a large cross-sectional area of a fluid path of the fluid groove 56, while securing the area of the guide part 54. When the bottom is formed in a linear shape, the distance L between the center O of the circumcircle R and the closest point P can be increased; therefore, it becomes possible to form the fluid groove 56 while maintaining a high strength of the cutting insert 50. The shape of the fluid groove 56 may be selected as appropriate, in accordance with the effects and advantages that are desired to be achieved.

The rear part 52 of the cutting insert 50 is formed so as to have a flat plate-like bottom surface 71 which is a smooth surface. When the cutting insert 50 is mounted into the insert pocket 11 of the body 10, the bottom surface 71 of the rear part 52 abuts on the seat surface 12.

The cutting insert 50 has a through hole 73. The through hole 73 is a fastening part for fixing the cutting insert 50 in the insert pocket 11 of the body 10, and is formed in the rear part 52 of the cutting insert 50. The through hole 73 is a tapered hole which is formed in a trumpet-like shape with an upper portion thereof having a larger diameter. The screw 75, which serves as a fastening component for fastening the cutting insert 50 to the body 10, is inserted into the through hole 73 from thereabove. A head part 77 of the screw 75 abuts on a tilted surface at the large-diameter portion of the trumpet-like tapered through hole 73 (see Fig. 1).

In the front view of the cutting insert 50, the through hole 73 has a central axis CL2 that is tilted with respect to a perpendicular line PL2 of the bottom surface 71 (see Fig. 16). In the side view of the cutting insert 50, the central axis CL2 of the through hole 73 is tilted rearward as it extends from the upper surface 57 toward the bottom surface 71, with respect to the perpendicular line PL2 of the bottom surface 71.

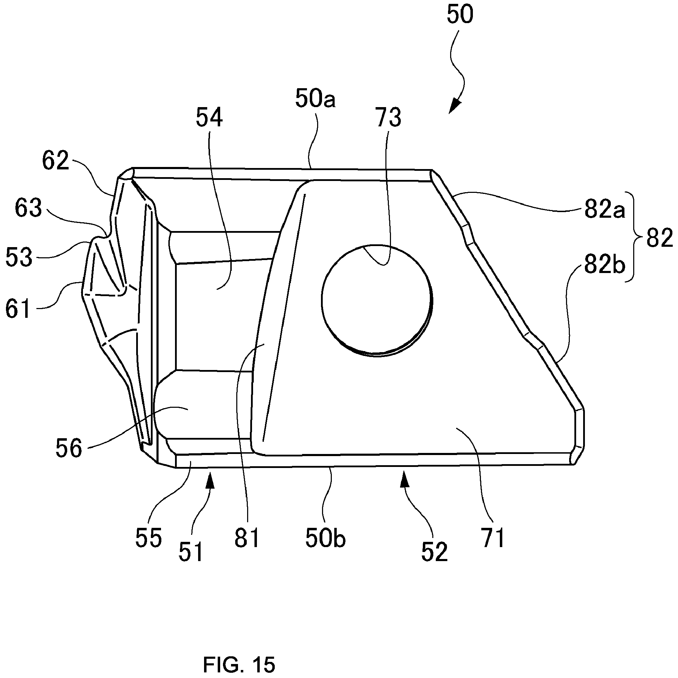

The cutting insert 50 has a front abutment surface 81 and a rear abutment surface 82 (see Fig. 15). The front abutment surface 81 is provided on the front side with respect to the through hole 73, and the rear abutment surface 82 is provided on the rear side with respect to the through hole 73. The front abutment surface 81 and the rear abutment surface 82 are rearward-facing surfaces. The front abutment surface 81 is provided on the lower side with respect to the bottom surface 71 which abuts on the seat surface 12 of the insert pocket 11, and is formed as a tilted surface that is tilted forward as it extends toward the lower side. The front abutment surface 81 does not necessarily have to be a tilted surface, and it may alternatively be a vertical surface. However, by forming the front abutment surface 81 as a tilted surface having an obtuse angle with respect to the bottom surface 71, the front abutment surface 81 can more effectively receive the cutting force F that is produced toward the lower side of the cutting insert 50 during machining. The rear abutment surface 82 is divided into two right and left abutment surface divisions 82a, 82b. A recess exists between the abutment surface division 82a and the abutment surface division 82b, and the provision of such recess ensures that, when the cutting insert 50 is mounted to the body 10, the outer side of the rear abutment surface 82 of the cutting insert 50 will abut on the rear constraining surface 22 of the insert pocket 11, which makes it possible to fix the cutting insert 50 without any wobbling.

The front abutment surface 81 and the rear abutment surface 82 are formed so as to be non-parallel to each other in the plan view of Fig. 15. More specifically, the front abutment surface 81 is tilted gradually forward as it extends from one side 50a toward the other side 50b of the cutting insert 50, and the rear abutment surface 82 is tilted gradually rearward as it extends from the one side 50a toward the other side 50b of the cutting insert 50. With such configuration, the front abutment surface 81 and the rear abutment surface 82 are arranged in an inverted V-shape in which the distance therebetween increases from the one side 50a toward the other side 50b in the plan view of Fig. 15 (see Fig. 15). Here, the cutting insert 50 receives a cutting force directed toward the other side 10b of the body 10 along the rear constraining surface 22 during cutting. At this time, since the front constraining surface 21 of the body 10 on which the front abutment surface 81 of the cutting insert 50 abuts is tilted in the opposite direction to the rear constraining surface 22, it is possible to retain the cutting insert 50 that would otherwise be moved toward the other side 10b of the body 10.

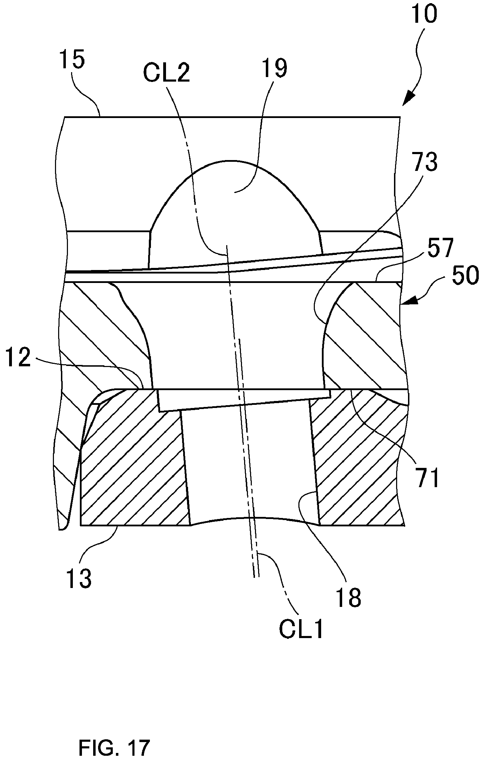

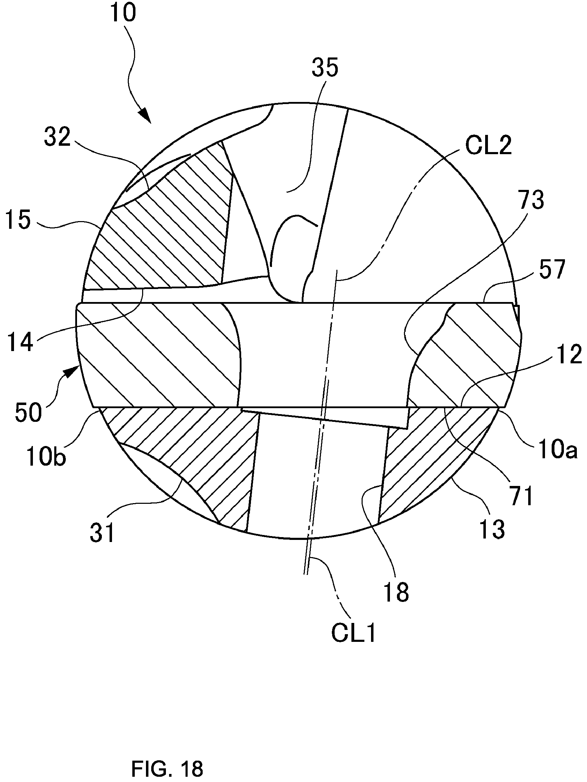

As shown in Figs. 17 and 18, the central axis CL2 of the through hole 73 is displaced from the central axis CL1 of the screw hole 18 formed in the lower jaw part 13 that constitutes the insert pocket 11, in the state in which the cutting insert 50 is arranged in the insert pocket 11 of the body 10. More specifically, the central axis CL2 of the through hole 73 is displaced toward the leading end side and the other side 10b of the body 10 with respect to the central axis CL1 of the screw hole 18.

Since the central axis CL2 of the through hole 73 of the cutting insert 50 and the central axis CL1 of the screw hole 18 of the insert pocket 11 are displaced from each other as described above, when the cutting insert 50 is assembled onto the body 10, the cutting insert 50 first abuts, with the front abutment surface 81 thereof, on the front constraining surface 21 of the insert pocket 11, and then slides on the front constraining surface 21 toward the one side 10a of the body 10 so as to be drawn into the rear side of the body 10. Such configuration makes it possible to cause the cutting insert 50 to easily abut on both the front constraining surface 21 and the rear constraining surface 22.

Next, the way in which the cutting insert 50 is mounted to the body 10 will now be described below.
In order to mount the cutting insert 50 to the body 10, the cutting insert 50 is placed close to the leading end of the insert pocket 11 of the body 10. At this time, the rear part 52 of the cutting insert 50 is directed so as to face the body 10 and the vertical position of the cutting insert 50 is aligned with the body 10 (see Fig. 2).

The cutting insert 50 is then inserted into the housing groove part 16 formed in the insert pocket 11 of the body 10 so as to be housed between the lower jaw part 13 and the upper jaw part 15. As a result, the cutting insert 50 is resiliently sandwiched and held in the housing groove part 16 that is formed such that the groove width W1 on the leading end side of the body 10 is narrower than the groove width W2 on the rear end side of the body 10. Such holding state constitutes a temporary fixture, and the holding force at this time does not provide a fixing force that can withstand the cutting force during cutting.

Next, the screw 75 is inserted into the through hole 73 of the cutting insert 50, and the screw 75 is screwed into the screw hole 18 in the lower jaw part 13. At this time, since the cutting insert 50 is held in the housing groove part 16 of the insert pocket 11, the screw 75 can be fastened without grasping the cutting insert 50.

In this way, by screwing the screw 75 that has been inserted into the through hole 73 of the cutting insert 50 into the screw hole 18 of the lower jaw part 13, the cutting insert 50 is fixed onto the lower jaw part 13, with the cutting insert 50 being in close contact with the seat surface 12 of the lower jaw part 13 and the abutment surface 14 of the upper jaw part 15, and thereby mounted in the insert pocket 11.

Here, since the central axis CL2 of the through hole 73 of the cutting insert 50 is displaced from the central axis CL1 of the screw hole 18 toward the leading end side and the other side 10b of the body 10, the cutting insert 50 first abuts, with the front abutment surface 81 thereof, on the front constraining surface 21 of the insert pocket 11, and then slides on the front constraining surface 21 toward the one side 10a of the body 10 so as to be drawn into the rear side of the body 10, as described above. As a result, the cutting insert 50 is mounted in the insert pocket 11 with its front abutment surface 81 and rear abutment surface 82 being respectively in contact with the front constraining surface 21 and the rear constraining surface 22 of the insert pocket 11. Accordingly, the cutting insert 50 is fixed in the insert pocket 11 with a high holding force and without any wobbling. In addition, the cutting insert 50 is mounted on the body 10 in a state in which the center of the circumcircle R is aligned with the rotational axis AX1 of the body 10.

When the cutting insert 50 is mounted in the insert pocket 11, the fluid groove 56 provided between the guide parts 54, 55 of the cutting insert 50 communicates with the groove part 31 of the body 10.

In the cutting tool 100 in which the cutting insert 50 is mounted in the insert pocket 11 of the body 10 as described above, the coolant discharged from the discharge port 33 is sent through the groove part 31 and the fluid groove 56 to a cutting location. The coolant discharged from the discharge port 34 is sent through the groove part 32 to the cutting location. Accordingly, the coolant can effectively cool the cutting insert 50 and discharge the chips.

In such cutting tool 100, rotary force that is produced in the cutting insert 50 during hole machining with respect to the workpiece is received by the seat surface 12 and the abutment surface 14 that constitute the insert pocket 11 of the body 10. In addition, pressing force directed toward the rear side of the cutting insert 50 which is produced when the cutting tool 100 is pressed is received by the front constraining surface 21 and the rear constraining surface 22 of the insert pocket 11 of the body 10 onto which the front abutment surface 81 and the rear abutment surface 82 abut.

As described above, since the cutting insert 50 comprises the two guide parts 54, 55 that are in sliding contact with the inner surface of a machined hole, the function of guide pads that has conventionally been loaded onto a holder by using screws is consolidated into the cutting insert 50 in the present embodiment, and the number of components can therefore be reduced. Such configuration makes it possible to reduce the diameter of the tool while maintaining the thickness of the cutting insert 50, to thereby secure a sufficient strength thereof. In addition, it is possible to send the coolant through the fluid groove 56 to the cutting location in the workpiece where cutting is performed by the cutting edge 53.

Furthermore, the distance L between the center O of the circumcircle R and the closest point P of the fluid groove 56 to the center O of the circumcircle R is set so as to be greater than a quarter (1/4) of the diameter D of the circumcircle R. Accordingly, the provision of the fluid groove 56 can maintain a necessary and sufficient strength, while sending the coolant to the cutting location in the workpiece.

Since the through hole 73 into which the screw 75 is inserted is provided in the rear part 52, the screw 75 can be inserted into such through hole 73 and easily fastened and fixed to the body 10.

By causing the front abutment surface 81, that is located on the front side with respect to the through hole 73 and on the lower side with respect to the bottom surface 71, to abut on the front constraining surface 21 of the body 10, the body 10 can receive the cutting force F which is produced during cutting of a workpiece by the cutting edge 53, which makes it possible to reduce the stress applied onto the screw 75 during the cutting.

In the body 10 according to the present embodiment, the cutting insert 50 can be resiliently sandwiched and held by the lower jaw part 13 and the upper jaw part 15 that constitute the housing groove part 16 of the insert pocket 11. Such configuration eliminates the need to grasp the cutting insert 50 with a hand during the mounting or removal operation of the cutting insert 50 with respect to the insert pocket 11, which makes it possible to improve the workability of the mounting and removal operations of the cutting insert 50. In particular, even if the diameter of the body 10 is reduced in order to perform hole machining for small-diameter holes, the cutting insert 50 can still be smoothly mounted into or removed from the insert pocket 11, without dropping the cutting insert 50. In addition, the screw hole 18 in the lower jaw part 13 is arranged at a position that does not overlap with the upper jaw part 15 in the plan view which is viewed from the side of the upper jaw part 15 (see Fig. 9). In other words, the screw hole 18 into which the screw 75 for fastening the cutting insert 50 is to be screwed is formed only in the lower jaw part 13, and it is therefore possible to prevent the lowering of the strength that would otherwise be caused by forming a through hole into which a screw is inserted or a screw hole into which a screw is screwed in the upper jaw part 15.

In the body 10 according to the present embodiment, by tilting the central axis CL1 of the screw hole 18 with respect to the perpendicular line PL1 of the seat surface 12 in the front view and the side view, the number of threads in the screw hole 18 can be increased. In particular, in the present embodiment, by tilting the central axis CL1 of the screw hole from one side 10a toward the other side 10b of the body 10, with respect to the perpendicular line PL1, in the front view of the body 10, the number of threads in the screw hole 18 can be further increased, and the fastening force of the cutting insert 50 by the screw 75 can be enhanced. Accordingly, even if the diameter of the body 10 is reduced in order to perform hole machining for small-diameter holes, it is still possible to sufficiently secure the fastening force of the cutting insert 50 by the screw 75. In addition, by tilting the central axis CL1 of the screw hole 18, with respect to the perpendicular line PL1 of the seat surface 12, toward the rear end of the body 10, as it extends away from the abutment surface 14 in the side view, the cutting insert 50 can be drawn into the rear side of the body 10 when the cutting insert 50 is fastened by screwing. Such configuration makes it possible to cause the front abutment surface 81 and the rear abutment surface 82 of the cutting insert 50 to firmly abut respectively on the front constraining surface 21 and the rear constraining surface 22 of the insert pocket 11 of the body 10 to thereby fix the cutting insert 50 without any wobbling and achieve stable cutting.

It should be noted that the present disclosure is not limited to the above-described specific examples, and design modifications to those specific examples that are made by a person skilled in the art are also encompassed in the scope of the present disclosure, as long as such design modifications include the characteristics of the present disclosure. The elements, as well as the arrangements, conditions, and shapes thereof, included in the above-described specific examples are not limited to those illustrated in the examples, and they may be modified as appropriate. The elements included in each of the above-described specific examples may be combined in different ways, unless any technical contradiction occurs.

The present invention provides a body and a cutting tool that are capable of allowing a cutting insert to be easily mounted thereon or removed therefrom.

## Claims

1. A body comprising an insert pocket into which a cutting insert is mounted, the insert pocket including:
a lower jaw part having a screw hole;
an upper jaw part that is arranged apart from the lower jaw part; and
a housing groove part into which the cutting insert is inserted, the housing groove part being formed between the lower jaw part and the upper jaw part,
wherein the housing groove part is formed such that a groove width on a leading end side is narrower than a groove width on a rear end side.

2. The body according to claim 1, wherein the screw hole is arranged at a position that does not overlap with the upper jaw part in a plan view which is viewed from a side of the upper jaw part.

3. The body according to claim 1 or 2, wherein the screw hole has a central axis that is tilted with respect to a perpendicular line of a seat surface of the lower jaw part on which the cutting insert abuts.

4. The body according to claim 3, wherein the central axis of the screw hole is tilted from one side toward the other side of the body, with respect to the perpendicular line of the seat surface, in a front view.

5. The body according to claim 3 or 4, wherein the central axis of the screw hole is tilted, with respect to the perpendicular line of the seat surface, toward a rear end as it extends away from an abutment surface of the upper jaw part on which the cutting insert abuts, in a side view.

6. A cutting tool, comprising:
the body according to any one of claims 1-5; and
a cutting insert that is mounted into the insert pocket of the body.

7. The cutting tool according to claim 6, wherein the cutting insert is mounted into the insert pocket of the body, in a state in which a center of a circumcircle is aligned with a rotational axis of the body in a front view.
